# EUROPÄISCHE PATENTSCHRIFT

(11) **EP 3 439 845 B1**
(45) Veröffentlichungstag und Bekanntmachung des Hinweises auf die Patenterteilung: **16.12.2020**
(21) Anmeldenummer: 17712967.3
(22) Anmeldetag: 22.03.2017
(51) Int. Cl.: B29C 45/28

(54) **SPRITZGUSSWERKZEUG**
INJECTION MOULD
OUTIL DE MOULAGE PAR INJECTION

(30) Priorität: 07.04.2016 CH 4472016
(43) Veröffentlichungstag der Anmeldung: 13.02.2019
(73) Patentinhaber: Fostag Formenbau AG, 8260 Stein am Rhein (CH)
(72) Erfinder: MÜHLEMANN, Rolf, 8255 Schlattingen (CH)
(74) Vertreter: Keller Schneider Patent- und Markenanwälte AG (Zürich)
(86) Internationale Anmeldenummer: PCT/EP2017/056792
(87) Internationale Veröffentlichungsnummer: WO 2017/174357

(56) Entgegenhaltungen:
- DE-A1- 10 039 864
- JP-A- H08 300 418
- US-A1- 2010 007 058

## Beschreibung

### Technisches Gebiet

Die Erfindung betrifft ein Spritzgusswerkzeug zur Herstellung mindestens eines Spritzgussteils mit einer äusseren Gestalt und einer inneren Gestalt. Das Spritzgussteil umfasst mindestens eine Kavität und jeweils eine mit der Kavität verbundene Heisskanaldüse mit ringförmiger Düsenmündung zum Einspritzen mindestens einer Schmelze in die Kavität.

### Technischer Hintergrund

Kunststoffbehältern oder behälterartige Kunststoffteile werden häufig mittels Spritzguss in Spritzgusswerkzeugen hergestellt. Ein Spritzgusswerkzeug für solche Teile umfasst mindestens eine gekühlte Kavität, in welche der Kunststoff in flüssiger Form über eine Heisskanaldüse durch eine Düsenmündung eingespritzt wird. Die Kavität wird durch eine Matrize, welche die Aussenform des herzustellenden Behälters bildet, und einen Kern, welcher die Innenform des herzustellenden Behälters bildet, ausgebildet. Die heisse Schmelze verfestigt sich nach dem Einspritzen in der gekühlten Kavität und kann nach dem Öffnen des Spritzgusswerkzeugs resp. der Kavität ausgestossen werden.

Bei den bekannten Spritzgusswerkzeugen für Kunststoffbehälter mit geschlossenem Boden ist der Anspritzpunkt zum Einspritzen des Kunststoffs mittig im Bodenbereich angeordnet und die Schmelze fliesst vom zentralen Bereich in einen peripheren Bereich des Spritzgussteils. In der einfachsten Bauart des Spritzgusswerkzeugs ist die Heisskanaldüse matrizenseitig angeordnet, was auch die Herstellung von Behältern mit geringem Umfang, von hohen oder schmalen Behältern oder von Rohlingen für Kunststoffflaschen erlaubt.

Bei manchen Spritzgusswerkzeugen können einfache, klein dimensionierte Heisskanaldüsen auch kernseitig angeordnet sein. Dies setzt jedoch voraus, dass der Behälter einen genügend grossen Umfang aufweist, so dass der Kern des Spritzgusswerkzeugs, welcher sich um die Heisskanaldüse erstreckt, gekühlt werden kann.

Bei behälterartigen Spritzgussteilen, wie z.B. Tubenköpfe, oder Behältern, die im Boden eine zentrale Öffnung aufweisen, ist ein punktförmige Anspritzung nicht geeignet. Solche Spritzgussteile werden matrizenseitig ringförmig um die Öffnung herum angespritzt, wobei auch hier die Schmelze vom zentralen Bereich in den peripheren Bereich des Spritzgussteils fliesst. Beispiele sind in WO14044647, EP1504873, US9050747, JPH08300418, DE10039864A1 und WO15059020 gezeigt.

### Darstellung der Erfindung

Eine Aufgabe der Erfindung ist es, ein Spritzgusswerkzeug anzugeben, welches ein peripheres, ringförmiges Anspritzen erlaubt, zur Herstellung von Spritzgussteilen, bei denen ein zentrales Anspritzen ungeeignet oder nicht gewünscht ist.

Das Spritzgusswerkzeug zur Herstellung mindestens eines Spritzgussteils mit einer äusseren Gestalt und einer inneren Gestalt umfasst mindestens eine Kavität und jeweils eine mit der Kavität verbundene Heisskanaldüse mit ringförmiger Düsenmündung zum Einspritzen mindestens einer Schmelze in die Kavität. Die mindestens eine Kavität ist durch eine gekühlte Matrize, welche die Aussenform für die äussere Gestalt des herzustellenden Spritzgussteils bildet, und durch einen Kern, welcher die Innenform für die innere Gestalt des herzustellenden Spritzgussteils bildet, ausgebildet. Die Heisskanaldüse weist einen Düsenkern und eine entlang dem Düsenkern verschiebbare Hohlnadel zum Öffnen und Schliessen der ringförmigen Düsenmündung auf. Der Düsenkern überragt die ringförmige Düsenmündung der Heisskanaldüse und bildet den Kern der Kavität des Spritzgusswerkzeugs aus. Weiter umfasst der Düsenkern stromauf von der Düsenmündung mindestens einen Isoliermantel, entlang welchem die Hohlnadel geführt ist. Der Isoliermantel ist aus Keramik oder einer wenig wärmeleitendes Metall oder wenig wärmeleitende Metalllegierung (z.B. ein Chromstahl) gefertigt. Ein wenig wärmeleitendes Metall/Metalllegierung soll eine geringere Wärmeleitfähigkeit aufweisen als die Metalllegierung für die geheizten Teile der Heisskanaldüse. Bevorzugt eine Wärmeleitfähigkeit von weniger als 50 A (W/(m*K)) (gemessen nach DIN V 4108-4).

Bei einem solchen Spritzgusswerkzeug bildet also die Heisskanaldüse mittels dem in der Heisskanaldüse axial nicht bewegbaren Düsenkern gleichzeitig die Innenform für die innere Gestalt des herzustellenden Spritzgussteils. D.h. der die ringförmige Düsenmündung überragende Bereich des Düsenkerns bildet mit seiner seitlichen Oberfläche und seiner Stirnseite die Innenform des Spritzgussteils. An manchen Stellen kann die Stirnseite des Düsenkern die Matrize berühren, so dass Aussparungen im Spritzgussteil entstehen. Die Schmelze wird durch die ringförmige Düsenmündung der Heisskanaldüse, welche den Düsenkern umringt, in einen Ringspalt der Kavität eingespritzt und fliesst zumindest teilweise entlang dem Düsenkern in Richtung Längsachse der Heisskanaldüse. Anschliessen kühlt sich die Schmelze in der Kavität ab und verfestigt sich zum Spritzgussteil. Bei Öffnen des Spritzgusswerkzeugs, d.h. nachdem Matrize und Kern auseinandergezogen sind, wird das Spritzgussteil ausgestossen.

Das Spritzgusswerkzeug erlaubt also die Herstellung von einstückigen Spritzgussteilen, durch ringförmiges Anspritzen von einem peripheren Bereich her, wobei die Schmelze vom peripheren Bereich in einen zentralen Bereich in Richtung Längsachse der Heisskanaldüse fliesst. So können beispielsweise Kunststoffbehälter oder behälterartige Kunststoffteile hergestellt werden, bei denen eine zentrale Einspritzung im Bodenbereich - sei es punkt- oder ringförmig - nicht möglich oder nicht gewünscht ist. Z.B. wenn im zentralen Bodenbereich ein nicht Kunststoffteil, beispielsweise eine Injektionsnadel, über- oder umspritzt werden soll.

Mit behälterartigen Spritzgussteilen sind neben Kunststoffbehältern auch Spritzguss- oder Kunststoffteile gemeint, die eine innere Gestalt und eine äussere Gestalt aufweisen. D.h. Boden oder Wand können auch Aussparungen aufweisen oder die Spritzgussteile sind erst mit zusätzlichen Elementen versehen geschlossene oder verschliessbare Behälter.

In einigen Ausführungsformen kann der Düsenkern einen inneren aktiv gekühlten Kühlkern, insbesondere ein wassergekühlter Kühlkern, und einen Aussenkern umfassen. Der Aussenkern bildet dabei die Innenform der Kavität und kann entsprechend der inneren Gestalt des gewünschten Spritzgussteils geformt sein. Der Kühlkern kann kreiszylindrisch aufgebaut sein und erlaubt eine effiziente Kühlung des Aussenkerns durch die Düse hindurch. Er kann in seiner Form unverändert für Spritzgusswerkzeuge mit unterschiedlichen Kavitäten verwendet werden, indem lediglich der Aussenkern an die gewünschte Innenform angepasst wird. Kühlkern und Aussenkern können auch derart ausgebildet sein, dass die Stirnseite des Kühlkerns eine Teil der Innenform ausbildet und der Aussenkern hülsenartig den Kühlkern umschliesst. Ein aktiv gekühlter Düsenkern kann bei einem Durchmesser ab 3 mm eingesetzt werden.

In einigen Ausführungsformen reicht der Isoliermantel bis zur Kavität. Um jedoch eine noch bessere Kühlung der Kavität zu erreichen, kann der Aussenkern, welcher gekühlt ist, eine umlaufende Schulter oder einen umlaufenden Flansch im Bereich der Düsenmündung aufweisen. Die umlaufende Schulter/der umlaufende Flansch bildet eine Seite der Düsenmündung aus und kann einen Teil der Kavität ausbilden, so dass die Kavität vollständig durch die gekühlte Matrizenplatte, die gekühlte Kernplatte und den gekühlten Düsenkern der Heisskanaldüse ausgebildet ist. Der Isoliermantel reicht dabei bis zur umlaufenden Schulter/Flansch.

In einigen Ausführungsformen kann der Aussenkern stromauf von der Düsenmündung eine umlaufend Aussparung aufweisen, um Wärme- resp. Kältebrücken zwischen Düsenkern und den geheizten Teilen der Heisskanaldüse zu verringern. Bevorzugt ist die umlaufende Aussparung im vorderen Bereich der Heisskanaldüse angeordnet, in dem die Schmelze nahe entlang dem Düsenkern geführt ist.

In einigen Ausführungsformen kann die Heisskanaldüse eine Koinjektionsdüse zur Injektion eines konzentrisch geschichteten Schmelzestroms in die Kavität sein. Dabei kann der geschichtete Schmelzestrom aus zwei äusseren Schichten aus einer ersten Schmelze und einer innere Schicht aus einer zweiten Schmelze sein. Die innere Schicht kann beispielsweise eine sog. Barriereschicht sein. Insbesondere bei mehrschichtigen Behältern oder behälterartigen Spritzgussteilen, die komplexe Strukturen wie Rippen, Vorsprünge und Aussparungen im Bodenbereich aufweisen, kann es aufgrund von Verwirbelungen des geschichteten Schmelzestroms nachteilig oder unmöglich sein, diese von einem zentralen Punkt her anzuspritzen.

In einigen Ausführungsformen kann eine gekühlte Matrizenplatte die Matrize ausbilden.

In einigen Ausführungsformen kann der Kern gekühlt und in einer gekühlten Kernplatte angeordnet sein.

In einigen Ausführungsformen kann die Heisskanaldüse mittels einem Dichtring in der gekühlten Kernplatte gelagert sein.

In einigen Ausführungsformen kann die Heisskanaldüse so gebaut sein, wie die in den internationalen Patentanmeldungen PCT/EP2015/071667 und PCT/EP2015/071668 von der gleichen Anmelderin beschriebenen Koinjektionsdüsen, mit dem Unterschied, dass die Ventilnadel eine Hohlnadel ist und die Koinjektionsdüse den voran beschriebene Düsenkern aufweist.

Eine solche Heisskanaldüse resp. Koinjektionsdüse zur Herstellung von mehrschichtigen Spritzgussteilen umfasst einen ersten Schmelzezuführungskanal für eine erste Schmelze; einen zweiten Schmelzezuführungskanal für eine zweite Schmelze; eine zentrale Bohrung; eine in der zentralen Bohrung axial bewegbar aufgenommene Hohlnadel zum Öffnen und Schliessen einer ringförmigen Düsenmündung; einen ringförmigen inneren Schmelzekanal, der im stromab gerichteten Bereich der Koinjektionsdüse durch die zentrale Bohrung und die Hohlnadel ausgebildet ist und fluidisch mit dem ersten Schmelzezuführungskanal verbunden ist; einen ringförmigen mittleren Schmelzekanal, der fluidisch mit dem zweiten Schmelzezuführungskanal verbunden ist und sich um den ringförmigen inneren Schmelzekanal erstreckt; einen ringförmigen äusseren Schmelzekanal, der fluidisch mit dem ersten Schmelzezuführungskanal verbunden ist und sich um den ringförmigen mittleren Schmelzekanal erstreckt; wobei der innere, mittlere und äussere Schmelzekanal im Bereich der Düsenspitze zur Bildung eines konzentrisch geschichteten Schmelzestrom fluidisch zusammengeführt sind. In der Hohlnadel ist der voran beschriebene Düsenkern angeordnet, welcher gleichzeitig den Kern einer Kavität ausbilden kann.

Die Koinjektionsdüse umfasst weiter einen Düsenkörper und einen Schmelzeverteilereinsatz, welcher die zentrale Bohrung aufweist. Der Schmelzeverteilereinsatz ist in einer zentralen Bohrung des Düsenkörpers aufgenommen und weist bevorzugt eine zylindrische sich zur Düsenspitze hin verjüngende Form auf. Entlang der Manteloberfläche resp. der äusseren Oberfläche sind mindestens ein Verteilerkanal für die erste Schmelze und mindestens ein Verteilerkanal für die zweite Schmelze eingeformt, welche die jeweiligen Schmelzen in Richtung Düsenspitze leiten.

Der mindestens eine Verteilerkanal für die erste Schmelze kann stromauf fluidisch mit dem ersten Schmelzezuführungskanal und dem ringförmigen inneren Schmelzekanal verbunden sein, und stromab mit dem ringförmigen äusseren Schmelzekanal verbunden sein. Der mindestens eine Verteilerkanal für die erste Schmelze kann stromab Verästelungen aufweisen, um die erste Schmelze gleichmässiger auf den ringförmigen äusseren Schmelzekanal zu verteilen.

Der mindestens eine Verteilerkanal für die zweite Schmelze kann stromauf fluidisch mit dem zweiten Schmelzezuführungskanal verbunden sein, und stromab mit dem ringförmigen mittleren Schmelzekanal verbunden sein. Der mindestens eine Verteilerkanal für die zweite Schmelze kann stromab Verästelungen aufweisen, um die zweite Schmelze gleichmässiger auf den ringförmigen mittleren Schmelzekanal zu verteilen. Dies erlaubt eine effiziente und gleichmässige Verteilung der Schmelzen auf ringförmige Schmelzekanäle mit Durchmessern von über 40 mm.

Die Koinjektionsdüse kann weiter eine Trennhülse umfassen, deren innere Oberfläche teilweise den ringförmigen mittleren Schmelzekanal ausbildet und deren äussere Oberfläche teilweise den ringförmigen äusseren Schmelzekanal ausbildet.

Der mindestens eine Verteilerkanal für die erste Schmelze kann stromab über eine Bohrung in der Trennhülse mit dem ringförmigen äusseren Schmelzekanal verbunden sein. Die Trennhülse kann auf der äusseren Oberfläche weitere Verteilerkanäle, bevorzugt verästelte Verteilerkanäle aufweisen, um die erste Schmelze effizient und gleichmässiger auf den ringförmigen äusseren Schmelzekanal zu verteilen.

Die Koinjektionsdüse kann auch mehrere erste und zweite Schmelzezuführungskanäle aufweisen, welche jeweils über Verteilerkanäle mit den jeweiligen ringförmigen Schmelzekanälen verbunden sind. Dies erlaubt eine effiziente und gleichmässige Verteilung der Schmelzen auf ringförmige Schmelzekanäle mit grossen Durchmessern von über 40 mm.

Die Koinjektionsdüse, insbesondere in Bezug auf die Verästelung der Verteilerkanäle, der zusätzlichen Verteilerkanäle auf der Trennhülse und/oder den mehreren Schmelzezuführungskanälen für die erste und zweite Schmelze, kann für sich auch als eigenständige Erfindung betrachtet werden. Dies auch unabhängig von der Ausgestaltung des Düsenkern, insbesondere unabhängig davon, ob der Düsenkern lediglich bis zur Düsenmündung reicht oder die Düsenmündung überragt und dabei ganz oder teilweise einen Teil der Kavität ausbildet, oder ob er gekühlt oder nicht gekühlt ist. Der Vorteil einer solchen Koinjektionsdüse liegt darin, dass sie eine ringförmige Anspritzung mit wesentlich grösseren Durchmessern als bisher möglich erlaubt. In Kombination mit dem voran beschriebenen Düsenkern können beispielsweise auch Behälter mit einem Durchmesser von mehr als 40 mm ringförmig von der breiten Seite resp. von dem peripheren Bereich her angespritzt werden, was bis anhin nicht möglich war.

Die Erfindung betrifft weiter eine Heisskanaldüse für eine oder mehrere Schmelzen (d.h. eine Heisskanaldüse für eine einfache Injektion oder für eine Koinjektion) für ein Spritzgusswerkzeug, wobei die Heisskanaldüse eine ringförmige Düsenmündung, einen Düsenkern und eine entlang dem Düsenkern verschiebbare Hohlnadel zum Öffnen und Schliessen der ringförmigen Düsenmündung aufweist. Der Düsenkern überragt die ringförmige Düsenmündung der Heisskanaldüse und im eingebauten Zustand der Heisskanaldüse bildet der Düsenkern einen Kern einer Kavität des Spritzgusswerkzeugs aus. Der Düsenkern kann wie voranstehend beschrieben ausgebildet sein.

Die Erfindung betrifft weiter ein Verfahren zur Herstellung eines Spritzgussteils mit einer inneren und einer äusseren Gestalt unter Verwendung eines voran beschriebenen Spritzgusswerkzeugs. Das Verfahren kann folgende Schritte umfassen: a) Schliessen des Spritzgusswerkzeugs unter Ausbildung einer gekühlten Kavität für das zu spritzende Spritzgussteil indem der Düsenkern der Heisskanaldüse in die gekühlte Matrize eingeführt wird; b) Einspritzen mindestens einer Schmelze in die gekühlte Kavität durch eine ringförmige den Düsenkern umlaufende Düsenmündung; und c) Öffnen des Spritzgusswerkzeugs und Ausstossen des Spritzgussteils.

Bei Koinjektion mehrerer Schmelzen als geschichteter Schmelzestrom mit z.B. einer Barriereschicht als innere Schicht, kann zuerst nur die erste Schmelze eingespritzt werden und erst anschliessend der geschichtete Schmelzestrom.

### Kurze Erläuterung zu den Figuren

Die Erfindung soll nachfolgend anhand von Ausführungsbeispielen im Zusammenhang mit der(n) Zeichnung(en) näher erläutert werden. Es zeigen:
- Fig. 1: eine Schnittdarstellung eines Spritzgusswerkzeugs;
- Fig. 2: eine Seitenansicht eines Schmelzeverteilereinsatzes;
- Fig. 3: eine Seitenansicht eines Schmelzeverteilereinsatzes mit Trennhülse; und
- Fig. 4: eine Detailansicht einer Heisskanaldüse im Bereich der Düsenmündung.

### Wege zur Ausführung der Erfindung

Das Spritzgusswerkzeug umfasst eine Matrizenplatte 1, welche die Matrize 1a für die Kavität 3 ausbildet, und eine Kernplatte 2, in welcher eine Heisskanaldüse 4 aufgenommen ist. Die Heisskanaldüse 4 weist ringförmige Düsenmündung 5 und eine Hohlnadel auf, wobei die Düsenmündung 5 durch die Hohlnadel 6 geöffnet und geschlossen werden kann. Dazu ist die Hohlnadel 6 bewegbar entlang einem axial nicht bewegbaren Düsenkern 7 geführt. Der Düsenkern 7 ragt über die ringförmige Düsenmündung hinaus und bildet den Kern 2a der Kavität 3.

In der gezeigte Ausführungsform umfasst der Düsenkern 7 einen inneren Kühlkern 8, welcher aktiv mit einem Kühlmedium, insbesondere Wasser, gekühlt wird, und einen Aussenkern 9. Das stromab gerichtete Ende des Aussenkerns 9 und die stromabgerichtete Stirnfläche 10 des Kühlkerns 8 bilden den Kern 2a der Kavität 3, d.h. sie entsprechen dem Negativ der inneren Gestalt des herzustellenden Spritzgussteils. Der Aussenkern könnte auch die gesamte Stirnfläche des Kerns 2a ausbilden. Der Düsenkern 7 weist in der gezeigten Ausführungsform stromauf von der Düsenmündung eine Isoliermantel 11 auf, welcher aus Keramik oder einer weniger wärmeleitenden Metalllegierung (z.B ein Chromstahl) als die Metalllegierung für die geheizten Teile der Heisskanaldüse 4 gefertigt ist. Der Isoliermantel 11 verringert die Wärmeübertragung zwischen den heissen Teilen der Heisskanaldüse 4 und dem gekühlten Düsenkern 8 resp. Aussenkern 9. Diese Wärmeübertragung ist zudem durch eine umlaufend Aussparung 12 auf der Manteloberfläche des Aussenkern 9, und zwar stromauf von der Düsenmündung 5, verringert. Der Isoliermantel 11 reicht bis an die Düsenmündung 5. Die Hohlnadel 6 ist entlang dem Isoliermantel 11 des Düsenkerns 7 geführt. Die Heisskanaldüse kann auch mehr als einen Isoliermantel aufweisen.

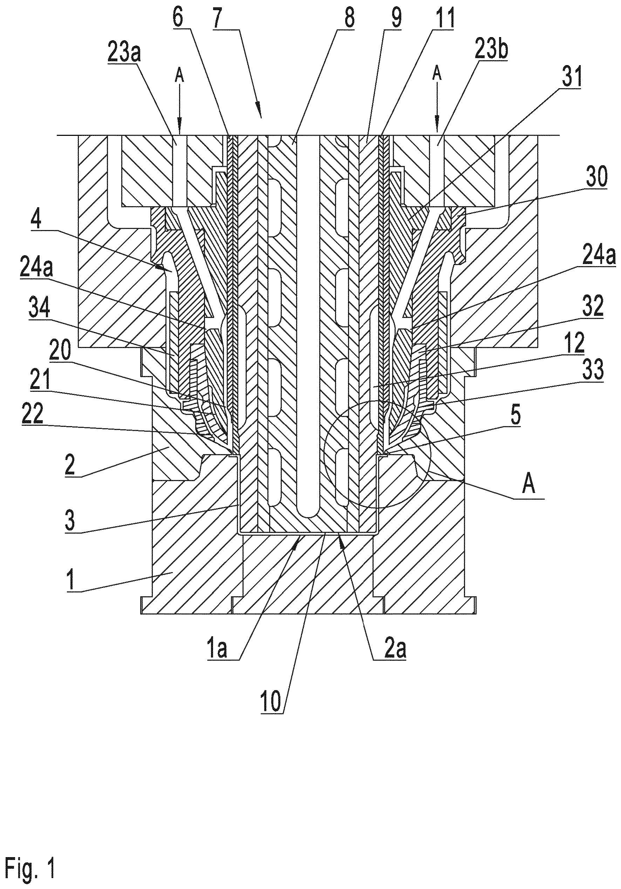

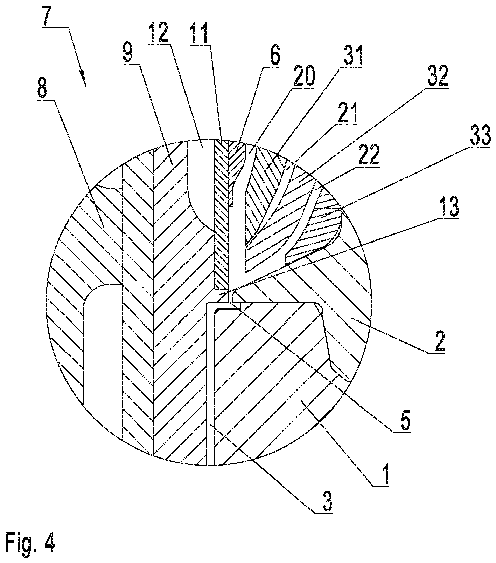

In der in Fig. 1 gezeigten Ausführungsform reicht der Isoliermantel 11 bis zur Kavität 3. In Fig. 4 ist eine Detailansicht einer Heisskanaldüse im Bereich der Düsenmündung (Kreis A in Fig. 1) gezeigt. Im Unterschied zur Heisskanaldüse in Fig. 1 weist der Aussenkern 9 der Heisskanaldüse aus Fig. 4 einen umlaufenden Flansch 13 im Bereich der Düsenmündung 5 auf. Der umlaufende Flansch 13 bildet eine Teil der Kavität 3, so dass die Kavität 3 vollständig durch die gekühlte Matrizenplatte 1, die gekühlte Kernplatte 2 und den gekühlten Düsenkern 7 der Heisskanaldüse 4 ausgebildet ist. Der Isoliermantel 11 reicht dabei lediglich bis zum umlaufenden Flansch 13 und isoliert den gekühlten Düsenkern gegenüber den geheizten Teilen der Heisskanaldüse 4. In der gezeigten Koinjektionsdüse, wie folgend noch detailliert beschrieben, sind dies ein Düsenkörper 30, ein Schmelzeverteilereinsatz 31, eine Trennhülse 32 und eine Halte- und Dichtungshülse 33. Je nach Ausgestaltung der Kavität, kann der umlaufende Flansch auch als Schulter ausgebildet sein, auf welcher der Isoliermantel ruht.

Die Heisskanaldüse kann für eine Schmelze oder für mehrere Schmelzen als Koinjektionsdüse konzipiert sein. In der gezeigten Ausführungsform von Fig. 1 ist die Heisskanaldüse als Koinjektionsdüse für einen dreifach geschichteten Schmelzestrom mit zwei äusseren Schichten aus einer ersten Schmelze A und einer inneren Schicht, z.B. eine sogenannte Barriereschicht, aus einer zweiten Schmelze B, ausgebildet. Die Koinjektionsdüse weist im vorderen Bereich stromauf von der ringförmigen Düsenmündung einen ringförmigen inneren Schmelzekanal 20, einen ringförmigen mittleren Schmelzekanal 21 und einen ringförmigen äusseren Schmelzekanal 22 auf. Der ringförmige innere 20 und der ringförmig äussere Schmelzekanal 22 sind fluidisch mit mindestens einem Schmelzezuführungskanal 23a, 23b für die erste Schmelze A verbunden. Der ringförmige mittlere Schmelzekanal 21 ist fluidisch mit mindestens einem Schmelzezuführungskanal 25a für die zweite Schmelze B verbunden (in Fig. 1 nicht erkennbar, weil vor und hinter der Schnittebene angeordnet).

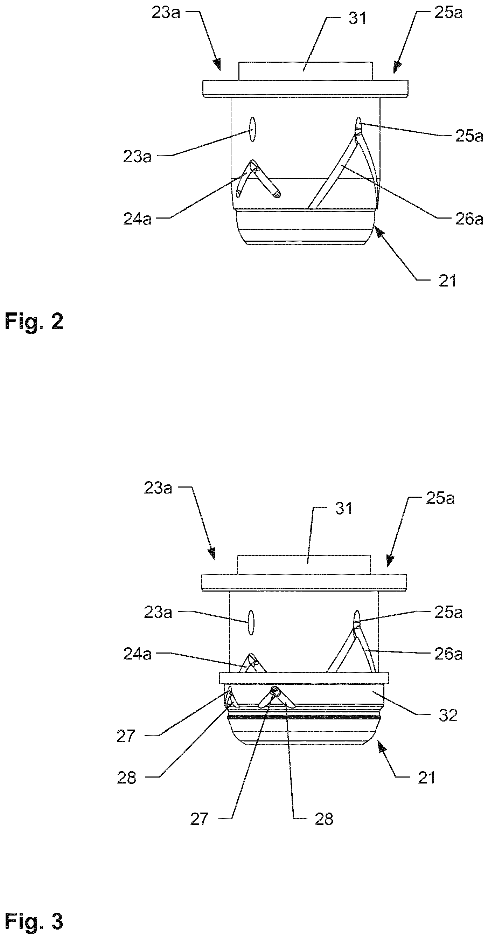

Die in Fig. 1 gezeigte Koinjektionsdüse 4 umfasst einen Düsenkörper 30, einen Schmelzeverteilereinsatz 31, eine Trennhülse 32, und eine Halte- und Dichtungshülse 33 (resp. Dichtring). Der Düsenkörper 30 ist mit einem Heizelement 34 versehen. Die Fig. 2 zeigt einen Seitenansicht des Schmelzeverteilereinsatzes aus Fig. 1. Die Fig. 3 zeigt eine Seitenansicht des Schmelzeverteilereinsatzes 21 und der Trennhülse 22 aus Fig. 1.

Die Koinjektionsdüse 4 weist eine zentrale Bohrung auf, welche sich axial durch den Schmelzeverteilereinsatz 31 erstreckt, und in welcher die Hohlnadel 6 bewegbar aufgenommen ist. Die zentrale Bohrung weist in einem mittleren bis unteren Bereich (d.h. stromab) einen grösseren Durchmesser auf als im oberen Bereich (d.h. stromauf), so dass sich entlang der Hohlnadel 6 der ringförmiger innerer Schmelzekanal 20 ausbildet. Die Hohlnadel 6 kann ebenfalls in diesem Bereich verjüngt sein, um den Querschnitt des ringförmigen inneren Schmelzekanals 20 zu vergrössern. Auch kann nur die Hohlnadel verjüngt ausgebildet sein und die zentrale Bohrung dabei über die gesamte Länge den gleichen Durchmesser aufweisen. Innerhalb der Hohlnadel 6 ist ein nicht bewegbarer Düsenkern angeordnet. Dieser kann wie der voran beschriebene gekühlte Düsenkern 7 ausgebildet sein, in Flussrichtung der Schmelze die Düsenmündung 5 der Heisskanaldüse 4 überragen und einen gekühlten Kern 2a in der Kernplatte 2 des Spritzgusswerkzeugs ausbilden, welcher die Innenform für die innere Gestalt des herzustellenden Spritzgussteils bildet.

Der ringförmige mittlere Schmelzekanal 21 wird durch eine äussere Oberfläche des Verteilereinsatzes 31 und eine inneren Oberfläche der Trennhülse 32 ausgebildet. Der ringförmige äussere Schmelzekanal 22 wird durch eine äussere Oberfläche der Trennhülse 32 und eine inneren Oberfläche der Halte- und Dichtungshülse 33 ausgebildet.

In der gezeigten Ausführungsform ist der ringförmige innere Schmelzekanal 20 stromauf fluidisch mit zwei ersten Schmelzezuführungskanälen 23a, 23b für die erste Schmelze A verbunden. Stromab ist er fluidisch mit einer Düsenmündung 5 verbunden. Die beiden ersten Schmelzezuführungskanäle 23a, 23b für die Schmelze A führen jeweils von einer ersten Schmelzezuführungsöffnung an der oberen Seite des Schmelzeverteilereinsatzes 31 teilweise durch den Düsenkörper zum ringförmigen inneren Schmelzekanal 20. Weiter ist jeweils mindestens ein Schmelzeverteilerkanal 24a (in Fig. 1 nur das oberen Ende erkennbar) für die Schmelze A fluidisch mit den beiden ersten Schmelzezuführungskanälen 23a, 23b verbunden und leitet die jeweilige Schmelze A in den gemeinsamen ringförmigen äusseren Schmelzekanal 22.

Die Schmelze A wird also über die beiden Schmelzezuführungskanäle und den jeweiligen Schmelzeverteilerkanälen in den gemeinsamen ringförmigen inneren Schmelzekanal 20 und den gemeinsamen ringförmig äusseren Schmelzekanal 22 geführt.

Weiter umfasst die Koinjektionsdüse 4 in der gezeigten Ausführungsform zwei zweite Schmelzezuführungskanäle für die zweite Schmelze B (in Fig. 1 nicht erkennbar). In den Figuren 2 und 3 ist einer der beiden Schmelzezuführungskanäle 25a mit einem Pfeil angedeutet und sein Ende ist auf der äusseren Oberfläche des Schmelzeverteilereinsatzes 31 erkennbar. Diese beiden Schmelzezuführungskanäle für die zweite Schmelze B führen wie die ersten beiden Schmelzezuführungskanäle 24a, 24b für die Schmelze A von jeweiligen Schmelzezuführungsöffnungen an der oberen Seite des Schmelzeverteilereinsatzes 31 teilweise durch den Düsenkörper 30 zu jeweils mindestens einem Schmelzeverteilerkanal für die zweite Schmelze B. Die Schmelzeverteilerkanäle für die zweite Schmelze B sind stromab fluidisch mit dem gemeinsamen ringförmigen mittleren Schmelzekanal 21 verbunden.

Sowohl die Schmelzeverteilerkanäle für die erste Schmelze A als auch die Schmelzeverteilerkanäle für die zweite Schmelze B sind auf der äusseren Oberfläche des Verteilereinsatzes 21 eingeformt (z.B. durch Fräsen) und sind in Richtung radial nach aussen durch die innere Oberfläche des Düsenkörpers 30 oder der Trennhülse 32 begrenzt.

Die Schmelzeverteilerkanäle 24a für die erste Schmelze A enden oberhalb des ringförmigen mittleren Schmelzekanals 21. Über eine Durchgangsöffnung 27 in der Trennhülse 32 sind sie jeweils mit auf der äusseren Oberfläche der Trennhülse 32 eingeformte Schmelzeverteilerkanäle 28 verbunden, welche schliesslich fluidisch mit dem ringförmigen äusseren Schmelzekanal 22 verbunden sind. Alternativ können die Bohrungen auch direkt in den ringförmigen äusseren Schmelzeverteilerkanal 22 führen.

Um insbesondere bei einem grossen Durchmesser der ringförmigen Düsenöffnung 5 die Schmelzen A, B gleichmässig auf den ringförmigen äusseren und mittleren Schmelzekanal 21, 22 zu verteilen, können die jeweiligen Schmelzeverteilerkanäle auf der äusseren Oberfläche des Verteilereinsatzes 31 eine Verästelung resp. Verzweigungen aufweisen, wie z.B. in den Figuren 2 und 3 gezeigt. Die Schmelzeverteilerkanäle auf der Trennhülse 32 können ebenfalls eine Verästelung resp. Verzweigung aufweisen. Nach jeder Verästelung resp. Verzweigung kann der Querschnitt der Kanäle verringert ausgebildet sein, um über die gesamte Fliessstrecke eine annähernd gleichmässige Fliessgeschwindigkeit zur erreichen.

Die ringförmigen Schmelzeströme aus dem ringförmigen inneren, mittleren und äusseren Schmelzekanäle 20, 21, 22 werden kurz vor dem Austritt durch die Düsenmündung 5 zu einem konzentrisch geschichteten Schmelzestrom zusammengeführt, welcher schliesslich durch die Düsenmündung 5 in die Kavität 3 gelangt.

### Bezeichnungsliste

- 1: Matrizenplatte
- 1a: Matrize
- 2: Kernplatte
- 2a: Kern
- 3: Kavität
- 4: Heisskanaldüse
- 5: ringförmige Düsenmündung
- 6: Hohlnadel
- 7: Düsenkern
- 8: Kühlkern
- 9: Aussenkern
- 10: Stirnfläche
- 11: Isoliermantel
- 12: umlaufende Aussparung
- 13: umlaufende Flansch
- 20: ringförmiger innerer Schmelzekanal
- 21: ringförmiger mittlerer Schmelzekanal
- 22: ringförmiger äusserer Schmelzekanal
- 23a, 23b: Schmelzezuführungskanal für Schmelze A
- 24a: Schmelzeverteilerkanal
- 25a: Schmelzezuführungskanal für Schmelze B
- 26a: Schmelzeverteilerkanal für Schmelze B
- 27: Durchgangsöffnung
- 28: Schmelzeverteilerkanal auf Trennhülse für Schmelze A
- 30: Düsenkörper
- 31: Schmelzeverteilereinsatz
- 32: Trennhülse
- 33: Halte- und Dichtungshülse / Dichtring
- 34: Heizelement

## Patentansprüche

1. Spritzgusswerkzeug zur Herstellung mindestens eines Spritzgussteils mit einer äusseren Gestalt und einer inneren Gestalt umfassend mindestens eine Kavität (3) und jeweils eine mit der Kavität (3) verbundene Heisskanaldüse (4) mit ringförmiger Düsenmündung (5) zum Einspritzen mindestens einer Schmelze in die Kavität (3);
wobei die mindestens eine Kavität (3) durch eine gekühlte Matrize (1a), welche die Aussenform für die äussere Gestalt des herzustellenden Spritzgussteils bildet, und durch einen Kern (2a), welcher die Innenform für die innere Gestalt des herzustellenden Spritzgussteils bildet, ausgebildet ist; und
wobei die Heisskanaldüse (4) einen Düsenkern (7) und eine entlang dem Düsenkern (7) verschiebbare Hohlnadel (6) zum Öffnen und Schliessen der ringförmigen Düsenmündung (5) aufweist, wobei
der Düsenkern (7) die ringförmige Düsenmündung (5) der Heisskanaldüse (4) überragt und der Düsenkern (7) den Kern (2a) der Kavität (3) des Spritzgusswerkzeugs ausbildet, **dadurch gekennzeichnet, dass** der Düsenkern (7) stromauf von der Düsenmündung (5) der Heisskanaldüse (4) mindestens einen aus Keramik, einem wenig wärmeleitenden Metall oder einer wenig wärmeleitenden Metalllegierung gefertigten Isoliermantel (11) umfasst, entlang welchem die Hohlnadel (6) geführt ist.

2. Spritzgusswerkzeug nach Anspruch 1, **dadurch gekennzeichnet, dass** der Düsenkern (7) einen inneren Kühlkern (8) und einen Aussenkern (9) umfasst.

3. Spritzgusswerkzeug nach Anspruch 2, **dadurch gekennzeichnet, dass** der Aussenkern (9) eine umlaufende Schulter oder einen umlaufenden Flansch (13) im Bereich der Düsenmündung (5) aufweist, welche eine Seite der Düsenmündung (5) ausbildet.

4. Spritzgusswerkzeug nach einem der Ansprüche 2 bis 3, **dadurch gekennzeichnet, dass** der Aussenkern (9) stromauf von der Düsenmündung (5) eine umlaufend Aussparung (12) aufweist.

5. Spritzgusswerkzeug nach einem der vorangehenden Ansprüche, **dadurch gekennzeichnet, dass** die Heisskanaldüse (4) eine Koinjektionsdüse zur Injektion eines konzentrisch geschichteten Schmelzestroms in die Kavität (3) ist.

6. Spritzgusswerkzeug nach einem der vorangehenden Ansprüche, **dadurch gekennzeichnet, dass** eine gekühlte Matrizenplatte (1) die Matrize (1a) ausbildet.

7. Spritzgusswerkzeug nach einem der vorangehenden Ansprüche, **dadurch gekennzeichnet, dass** der Kern (2a) gekühlt ist und in einer gekühlten Kernplatte (2) angeordnet ist.

8. Spritzgusswerkzeug nach einem der vorangehenden Ansprüche, **dadurch gekennzeichnet, dass** die Heisskanaldüse (4) mittels einem Dichtring (33) in der gekühlten Kernplatte gelagert ist.

9. Heisskanaldüse für ein Spritzgusswerkzeug, wobei die Heisskanaldüse (4) eine ringförmige Düsenmündung, einen Düsenkern (7) und eine entlang dem Düsenkern (7) verschiebbare Hohlnadel (6) zum Öffnen und Schliessen der ringförmigen Düsenmündung (5) aufweist, wobei der Düsenkern (7) die ringförmige Düsenmündung (5) der Heisskanaldüse (4) überragt und der Düsenkern (7) im eingebauten Zustand der Heisskanaldüse (4) einen Kern (2a) einer Kavität (3) des Spritzgusswerkzeugs ausbildet, **dadurch gekennzeichnet, dass** der Düsenkern (7) stromauf von der Düsenmündung (5) der Heisskanaldüse (4) mindestens einen aus Keramik, einem wenig wärmeleitenden Metall oder einer wenig wärmeleitenden Metalllegierung gefertigten Isoliermantel (11) umfasst, entlang welchem die Hohlnadel (6) geführt ist.

10. Heisskanaldüse nach Anspruch 9, **dadurch gekennzeichnet, dass** der Düsenkern (7) einen inneren Kühlkern (8) und einen Aussenkern (9) umfasst.

11. Verfahren zur Herstellung eines Spritzgussteils unter Verwendung eines Spritzgusswerkzeugs nach einem der Ansprüche 1 bis 8.

12. Verfahren nach Anspruch 11, umfassend folgende Schritte:
a) Schliessen des Spritzgusswerkzeugs unter Ausbildung einer gekühlten Kavität (3) für das zu spritzende Spritzgussteil indem der Düsenkern (7) der Heisskanaldüse (4) in die gekühlte Matrize (1a) eingeführt wird;
b) Einspritzen mindestens einer Schmelze in die gekühlte Kavität (3) durch eine ringförmige den Düsenkern (7) umlaufende Düsenmündung (5); und
c) Öffnen des Spritzgusswerkzeugs und Ausstossen des Spritzgussteils.

## Claims

1. An injection moulding tool for producing at least one injection-moulded part with an outer shape and an inner shape comprising at least one cavity (3) and respectively one hot-runner nozzle (4) connected to the cavity (3) having an annular nozzle mouth (5) for injecting at least one melt into the cavity (3);
wherein the at least one cavity (3) is formed by a cooled die (1a) which forms the outer form for the outer shape of the injection-moulded part to be produced and by a core (2a) which forms the inner form for the inner shape of the injection-moulded part to be produced; and
wherein the hot-runner nozzle (4) has a nozzle core (7) and a hollow needle (6) which is displaceable along the nozzle core (7) for opening and closing the annular nozzle mouth (5), wherein
the nozzle core (7) protrudes beyond the annular nozzle mouth (5) of the hot-runner nozzle (4) and the nozzle core (7) forms the core (2a) of the cavity (3) of the injection moulding tool, **characterised in that** upstream of the nozzle mouth (5) of the hot-runner nozzle (4), the nozzle core (7) comprises at least one insulating jacket (11), made of ceramic, a low heat-conducting metal or a low heat-conducting metal alloy, along which the hollow needle (6) is guided.

2. The injection moulding tool according to claim 1, **characterised in that** the nozzle core (7) comprises an inner cooling core (8) and an outer core (9).

3. The injection moulding tool according to claims 2 **characterised in that** the outer core (9) has a circumferential shoulder or a circumferential flange (13) in the region of the nozzle mouth (5), which forms one side of the nozzle mouth (5).

4. The injection moulding tool according to one of claims 2 to 3, **characterised in that** upstream of the nozzle mouth (5) the outer core (9) has a circumferential recess (12).

5. The injection moulding tool according to one of the preceding claims, **characterised in that** the hot-runner nozzle (4) is a co-injection nozzle for injection of a concentrically layered melt flow into the cavity (3).

6. The injection moulding tool according to one of the preceding claims, **characterised in that** a cooled die plate (1) forms the die (1a).

7. The injection moulding tool according to one of the preceding claims, **characterised in that** the core (2a) is cooled and is arranged in a cooled core plate (2).

8. The injection moulding tool according to one of the preceding claims, **characterised in that** the hot-runner nozzle (4) is mounted in the cooled core plate by means of a sealing ring (33).

9. A hot-runner nozzle for an injection moulding tool, wherein the hot-runner nozzle (4) has an annular nozzle mouth, a nozzle core (7) and a hollow needle (6) displaceable along the nozzle core (7) for opening and closing the annular nozzle mouth (5), wherein the nozzle core (7) protrudes beyond the annular nozzle mouth (5) of the hot-runner nozzle (4) and that the nozzle core (7) in the installed state of the hot-runner nozzle (4) forms a core (2a) of a cavity (3) of the injection moulding tool, **characterised in that** upstream of the nozzle mouth (5) of the hot-runner nozzle (4), the nozzle core (7) comprises at least one insulating jacket (11) made of ceramic, a low heat-conducting metal or a low heat-conducting metal alloy, along which the hollow needle (6) is guided.

10. The hot-runner nozzle according to claim 9, **characterised in that** the nozzle core (7) comprises an inner cooling core (8) and an outer core (9).

11. Method for producing an injection-moulded part using an injection moulding tool according to one of claims 1 to 8.

12. The method according to claim 11, comprising the following steps:
a) closing the injection moulding tool to form a cooled cavity (3) for the injection-moulded part to be injected by introducing the nozzle core (7) of the hot-runner nozzle (4) into the cooled die (1a) ;
b) injecting at least one melt into the cooled cavity (3) through an annular nozzle mouth (5) running around the nozzle core (7); and
c) opening the injection moulding tool and ejecting the injection-moulded part.

## Revendications

1. Outil de moulage par injection, destiné à fabriquer au moins une pièce moulée par injection présentant une forme extérieure et une forme intérieure, comprenant au moins une cavité (3) et chaque fois une buse à canal chaud (4) reliée avec la cavité (3), pourvue d'une embouchure de buse (5) de forme annulaire, destinée à injecter au moins une masse fondue dans la cavité (3) ;
l'au moins une cavité (3) étant conçue d'une matrice (la) refroidie, laquelle créé le moule extérieur pour la forme extérieure de la pièce moulée par injection qui doit être fabriquée, et d'un noyau (2a), lequel créé le moule intérieur pour la forme intérieure de la pièce moulée par injection qui doit être fabriquée ; et
la buse à canal chaud (4) comportant un noyau de buse (7) et une aiguille creuse (6) déplaçable le long du noyau de buse (7), pour ouvrir et pour fermer l'embouchure de buse (5) de forme annulaire,
le noyau de buse (7) débordant par-dessus l'embouchure de buse (5) de forme annulaire de la buse à canal chaud (4) et le noyau de buse (7) formant le noyau (2a) de la cavité (3) de l'outil de moulage par injection, **caractérisé en ce que** le noyau de buse (7) comprend en amont de l'embouchure de buse (5) de la buse à canal chaud (4) au moins une enveloppe isolante (11) fabriquée en céramique, en un métal faiblement thermoconducteur ou en un alliage métallique faiblement thermoconducteur le long de laquelle est guidée l'aiguille creuse (6).

2. Outil de moulage par injection selon la revendication 1, **caractérisé en ce que** le noyau de buse (7) comprend un noyau refroidisseur (8) interne et un noyau externe (9) .

3. Outil de moulage par injection selon la revendication 2, **caractérisé en ce que** le noyau externe (9) comporte un épaulement périphérique ou une bride (13) périphérique dans la région de l'embouchure de buse (5) qui forme un côté de l'embouchure de buse (5).

4. Outil de moulage par injection selon l'une quelconque des revendications 2 à 3, **caractérisé en ce que** le noyau externe (9) comporte en amont de l'embouchure de buse (5) une encoche (12) périphérique.

5. Outil de moulage par injection selon l'une quelconque des revendications précédentes, **caractérisé en ce que** la buse à canal chaud (4) est une buse de co-injection, pour l'injection d'un flux de masse fondu étagé de manière concentrique dans la cavité (3).

6. Outil de moulage par injection selon l'une quelconque des revendications précédentes, **caractérisé en ce qu'**une plaque de matrice (1) refroidie forme la matrice (1a).

7. Outil de moulage par injection selon l'une quelconque des revendications précédentes, **caractérisé en ce que** le noyau (2a) est refroidi et est placé dans une plaque centrale (2) refroidie.

8. Outil de moulage par injection selon l'une quelconque des revendications précédentes, **caractérisé en ce que** la buse à canal chaud (4) est logée au moyen d'une bague d'étanchéité (33) dans la plaque centrale refroidie.

9. Buse à canal chaud pour un outil de moulage par injection, la buse à canal chaud (4) comportant une embouchure de buse de forme annulaire, un noyau de buse (7) et une aiguille creuse (6) déplaçable le long du noyau de buse (7), pour ouvrir et pour fermer l'embouchure de buse (5) de forme annulaire, le noyau de buse (7) débordant par-dessus l'embouchure de buse (5) de forme annulaire de la buse à canal chaud (4) et lorsque la buse à canal chaud (4) est montée, le noyau de buse (7) formant un noyau (2a) d'une cavité (3) de l'outil de moulage par injection, **caractérisée en ce que** le noyau de buse (7) comprend en amont de l'embouchure de buse (5) de la buse à canal chaud (4) au moins une enveloppe isolante (11) fabriquée en céramique, en un métal faiblement thermoconducteur ou en un alliage métallique faiblement thermoconducteur, le long de laquelle est guidée l'aiguille creuse (6).

10. Buse à canal chaud selon la revendication 9, **caractérisé en ce que** le noyau de buse (7) comprend un noyau refroidisseur (8) interne et un noyau externe (9) .

11. Procédé, destiné à fabriquer une pièce moulée par injection en utilisant un outil de moulage par injection selon l'une quelconque des revendications 1 à 8.

12. Procédé selon la revendication 11, comprenant les étapes suivantes consistant à :
a) fermer l'outil de moulage par injection en créant une cavité (3) refroidie pour la pièce moulée par injection qui doit être injectée, en introduisant le noyau de buse (7) de la buse à canal chaud (4) dans la matrice (1a) refroidie ;
b) injecter au moins une masse fondue dans la cavité (3) à travers une embouchure de buse (5) de forme annulaire, entourant le noyau de buse (7) ; et
c) ouvrir l'outil de moulage par injection et expulser la pièce moulée par injection.
